# EUROPEAN PATENT APPLICATION

(11) **EP 4 228 024 A1**
(43) Date of publication of application: **16.08.2023**
(21) Application number: 21962753.6
(22) Date of filing: 24.12.2021
(51) Int. Cl.: H01M 4/133, H01M 10/0525

(54) **ARTIFICIAL GRAPHITE AND PREPARATION METHOD THEREFOR, SECONDARY BATTERY CONTAINING ARTIFICIAL GRAPHITE, AND ELECTRIC DEVICE**

(71) Applicant: Contemporary Amperex Technology Co., Limited, Ningde City, Fujian 352100 (CN)
(72) Inventor: LI, Lianchuan, Ningde City, Fujian 352100 (CN); LI, Yuanyuan, Ningde City, Fujian 352100 (CN); HE, Libing, Ningde City, Fujian 352100 (CN); SHEN, Rui, Ningde City, Fujian 352100 (CN)
(74) Representative: Gong, Jinping
(86) International application number: PCT/CN2021/141166
(87) International publication number: WO 2023/115530

(57) **Abstract**

This application provides artificial graphite and a preparation method thereof, a secondary battery containing the artificial graphite, and an electric apparatus. The artificial graphite includes secondary particles and satisfies A ≥ 0.5, where A is a ratio of a powder compacted density of the artificial graphite at 2t pressure to a particle size by volume Dᵥ1 of the artificial graphite. The secondary battery provided in this application can have low cyclic volume swelling while maintaining high energy density.

## Description

### TECHNICAL FIELD

This application relates to the field of secondary battery technologies, and in particular, to artificial graphite and a preparation method thereof, a secondary battery containing such artificial graphite, and an electric apparatus.

### BACKGROUND

Secondary batteries are widely applied due to their outstanding characteristics such as high energy density, zero pollution, and long service life.

However, continuous charging and discharging of the secondary battery lead to volume change of the negative electrode active material during delithiation/lithiation, for example, volume swelling during cycling leads to increase in an internal stress of the battery, thus affecting service life and safety performance of the battery. Recently, with rapid popularization of new energy vehicles, requirements of the market for the service life and safety performance of power type secondary batteries are increasingly higher. Therefore, in order to enhance market competitiveness of new energy vehicles, it is necessary to provide a new technology that can reduce volume swelling of secondary batteries.

### SUMMARY

This application has been made in view of the foregoing issues. An objective of this application is to provide artificial graphite with low swelling and high gram capacity and a preparation method thereof, and a negative electrode plate prepared by using the artificial graphite as a negative electrode active material. Further, this application is further intended to provide a secondary battery with low volume swelling and high energy density during cycling, and an electric apparatus including the secondary battery.

To achieve the foregoing objectives, a first aspect of this application provides artificial graphite, where the artificial graphite includes secondary particles and satisfies A ≥ 0.5, where A is a ratio of a powder compacted density (measured in g/cm³) of the artificial graphite at 2t pressure to a particle size by volume Dᵥ1 (measured in µm) of the artificial graphite.

In some implementations, the artificial graphite satisfies 0.50 ≤ A ≤ 1.40, optionally 0.70 ≤ A ≤ 1.30, and further optionally 0.70 ≤ A ≤ 1.00;

In some implementations, the artificial graphite may be secondary particles.

In some implementations, the powder compacted density of the artificial graphite at 2t pressure is 1.60 g/cm³ - 1.95 g/cm³, and optionally 1.70 g/cm³ - 1.90 g/cm³.

In some implementations, the particle size by volume Dᵥ1 of the artificial graphite may be 1.5 µm-3.5 µm, optionally 1.8 µm-3.2 µm, and further optionally 2.0 µm-3.2 µm.

In some implementations, the particle size by volume Dᵥ50 of the artificial graphite may be 10.0 µm-20.0 µm, and optionally 12.0 µm-18.0 µm.

In some implementations, a gram capacity of the artificial graphite is 350 mAh/g or more, and optionally 352 mAh/g or more.

A second aspect of the present invention provides a preparation method of artificial graphite, including the following steps:
S1: performing crushing, grading, and shaping treatment on a raw material to obtain a precursor;
S2: performing granulation treatment on the precursor obtained in step S1 to obtain an intermediate 1;
S3: performing graphitization treatment on the intermediate 1 obtained in step S2 at a temperature of 2700°C-3200°C to obtain an intermediate 2; and
S4: performing mechanical treatment on the intermediate 2 obtained in step S3 in a mechanical fusion machine to obtain artificial graphite;
where the artificial graphite includes secondary particles and satisfies A ≥ 0.5, and A is a ratio of a powder compacted density of the artificial graphite at 2t pressure to a particle size by volume Dᵥ1 of the artificial graphite.

In some implementations, in the mechanical treatment in step S4, a rotating speed of the mechanical fusion machine is 600 rpm-1400 rpm, and optionally 800 rpm-1200 rpm.

In some implementations, a treatment time of the mechanical treatment in step S4 may be 5 min to 30 min, and optionally 5 min to 25 min.

In some implementations, a binder may be added in the granulation treatment in step S2, and an amount of the binder added is 5%-15% of a weight of the precursor used for the granulation in step S2; and optionally, the binder may include one or more of coal tar, pitch, epoxy resin, and phenolic resin.

In some implementations, the raw material in step S1 may include one or more of green petroleum coke, calcined petroleum coke, needle green coke, calcined needle coke, pitch coke, and metallurgical coke; and optionally, the raw material may include one or more of green petroleum coke, needle green coke, and calcined needle coke.

A third aspect of this application provides a secondary battery, including a negative electrode plate, where the negative electrode plate includes a negative electrode active material, and the negative electrode active material includes the artificial graphite according to the first aspect of this application or the artificial graphite prepared by using the method according to the second aspect of this application.

A fourth aspect of this application provides an electric apparatus, including the secondary battery according to the third aspect of this application.

### Beneficial effects

In the secondary battery according to this application, the negative electrode active material includes artificial graphite, where the artificial graphite includes secondary particles and satisfies A ≥ 0.5, and A is a ratio of a powder compacted density of the artificial graphite at 2t pressure to a particle size by volume Dᵥ1 of the artificial graphite. The artificial graphite according to this application with round and smooth particles can significantly increase adhesion between particles. During cycling of the secondary battery, high adhesion between particles of the artificial graphite serving as the negative electrode active material can effectively maintain contact between particles and reduce thickness growth of electrode plate, so as to significantly reduce swelling of the electrode plate, thereby significantly reducing volume swelling of the secondary battery containing the artificial graphite during cycling. Low volume swelling of the secondary battery during cycling is conducive to maintaining a high volumetric energy density of the secondary battery, and also helps reduce internal stress of a cell of the secondary battery, which reduces deformation of the cell under an action of the internal stress, and effectively improves safety performance of the secondary battery. Therefore, the artificial graphite involved in this application can improve the safety performance and energy density of the secondary battery. In addition, the secondary battery with low volume swelling can maintain an internal structure suitable for electrolyte infiltration during cycling, so that the electrolyte solution can fully infiltrate into the cell, and increase lithium ion transmission channels, thereby improving cycling performance of the secondary battery. In addition, low electrode plate swelling also helps avoid a risk of short circuit of the cell, thereby improving safety performance of the secondary battery. The electric apparatus of this application includes the secondary battery according to this application, and therefore has at least the same advantages as the secondary battery.

In the preparation method of artificial graphite according to this application, a mechanical fusion machine is used to perform mechanical treatment on graphitized particles after a graphitization step, which can remove corners and edges of lumpy particles, making surfaces of artificial graphite particles finally obtained rounder and smoother. When the artificial graphite is used as an active material of the negative electrode plate of the secondary battery, adhesion between particles can be significantly increased, and the electrode plate swelling can be significantly reduced, so that the secondary battery with low volume swelling and the electric apparatus including the secondary battery can be obtained.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic diagram of a secondary battery according to an embodiment of this application.
FIG. 2 is a schematic diagram of a battery module according to an embodiment of this application.
FIG. 3 is a schematic diagram of a battery pack according to an embodiment of this application.
FIG. 4 is an exploded view of FIG. 3.
FIG. 5 is a schematic diagram of an electric apparatus according to an embodiment of this application.
FIG. 6a to FIG. 6c are SEM (scanning electron microscope, scanning electron microscope) images of artificial graphite according to Example 1, Example 2, and Example 3 of this application.

Reference signs are as follows:
1. battery pack;
2. upper box body;
3. lower box body;
4. battery module; and
5. secondary battery.

### DESCRIPTION OF EMBODIMENTS

The following specifically discloses implementations of artificial graphite and a preparation method thereof, a secondary battery, and an electric apparatus in this application with appropriate reference to detailed descriptions of accompanying drawings. However, unnecessary detailed descriptions may be omitted. For example, detailed descriptions of well-known matters or overlapping descriptions of actual identical structures have been omitted. This is to avoid unnecessary cumbersomeness of the following descriptions, to facilitate understanding by persons skilled in the art. In addition, accompanying drawings and the following descriptions are provided for persons skilled in the art to fully understand this application and are not intended to limit the subject described in the claims.

"Ranges" disclosed in this application are defined in the form of lower and upper limits, given ranges are defined by selecting lower and upper limits, and the selected lower and upper limits define boundaries of special ranges. Ranges defined in such method may or may not include end values, and any combination may be used, to be specific, any lower limit may be combined with any upper limit to form a range. For example, if ranges of 60-120 and 80-110 are provided for a specific parameter, it should be understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a numerical range of "a-b" is an abbreviated representation of any combination of real numbers from a to b, where both a and b are real numbers. For example, a numerical range of "0-5" means that all real numbers in the range of "0-5" are listed herein, and "0-5" is just an abbreviated representation of a combination of these numbers. In addition, when a parameter is expressed as an integer greater than or equal to 2, it is equivalent to disclosure that the parameter is, for example, an integer among 2, 3, 4, 5, 6, 7, 8, 9, 10, 11, 12, and so on.

Unless otherwise specified, all the implementations and optional implementations of this application can be mutually combined to form a new technical solution.

Unless otherwise specified, all the technical features and optional technical features of this application can be mutually combined to form a new technical solution.

Unless otherwise specified, all the steps in this application can be performed in sequence or at random, or preferably, are performed in sequence. For example, a method including steps (a) and (b) indicates that the method may include steps (a) and (b) performed in sequence, or may include steps (b) and (a) performed in sequence. For example, that the method may further include step (c) indicates that step (c) may be added to the method in any order. For example, the method may include steps (a), (b), and (c), or steps (a), (c), and (b), or steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components may be included or contained.

Unless otherwise specified, in this application, the term "or" is inclusive. For example, a phrase "A or B" means "A, B, or both A and B". More specifically, any of the following conditions satisfies the condition "A or B": A is true (or present) and B is false (or not present); A is false (or not present) and B is true (or present); or both A and B are true (or present).

In the descriptions of this specification, it should be noted that "more than" or "less than" is inclusive of the present number and that "more" in "one or more" means two or more than two, unless otherwise specified.

Electricity, as an economical, practical, clean and easily controllable and convertible form of energy, is increasingly used in various electric apparatuses. Secondary batteries have become the preferred power source for electrical apparatuses thanks to their advantages such as high energy density, portability, zero memory effect, and environmental friendliness. However, the secondary battery is subject to volume swelling due to the swelling of the negative electrode plate thereof during cycling, leading to an increase in internal stress of the battery and even posing a risk of failure of the secondary battery, which also restrains increase of the energy density of the secondary battery, thereby affecting service life and safety performance of the battery. Therefore, how to reduce volume swelling of the secondary battery during cycling has become a focus of the field of secondary battery technology.

The inventors have noted through extensive researches that, when artificial graphite including secondary particles satisfies A ≥ 0.5, where A is a ratio of a powder compacted density (measured in g/cm³) of the artificial graphite at 2t pressure to a particle size by volume Dᵥ1 (measured in µm) of the artificial graphite, adhesion between particles of artificial graphite serving as an active material of a negative electrode plate can be significantly increased, and volume swelling of a secondary battery containing the artificial graphite during cycling can be significantly reduced. In addition, this is also conducive to maintaining a high energy density of the secondary battery, thereby improving service life and safety performance of the secondary battery and a battery module, a battery pack, and an electric apparatus including the secondary battery.

### [Artificial graphite]

A first aspect of this application provides artificial graphite. The artificial graphite includes secondary particles and satisfies A ≥ 0.5, where A is a ratio of a powder compacted density of the artificial graphite at 2t pressure to a particle size by volume Dᵥ1 of the artificial graphite.

The inventors have found that when A ≥ 0.5, where A is a ratio of a powder compacted density of the artificial graphite at 2t pressure to a particle size by volume Dᵥ1 of the artificial graphite, adhesion between particles of artificial graphite serving as a negative electrode plate can be significantly increased, and cycling swelling of the negative electrode plate can be significantly reduced, thereby significantly reducing volume swelling of the secondary battery containing the artificial graphite during cycling. Small volume increase of the secondary battery during cycling is conducive to maintaining a high energy density of the secondary battery. In particular, the secondary battery with low cycling swelling can maintain an internal structure suitable for electrolyte infiltration during cycling, so that the electrolyte solution can fully infiltrate into the cell, thereby prolonging the service life of the secondary battery. In addition, low cycling swelling of the secondary battery can further reduce the internal stress of the cell, and reduces deformation of the cell under an action of the internal stress, effectively improving the safety performance of the secondary battery. Therefore, a battery module, a battery pack, and an electric apparatus using the secondary battery have improved safety performance and prolonged service life.

In some embodiments, the artificial graphite may satisfy 0.50 ≤ A ≤ 1.40, for example, 0.60 ≤ A ≤ 1.40, 0.70 ≤ A ≤ 1.30, 0.80 ≤ A ≤ 1.20, 0.50 ≤ A ≤ 1.30, 0.60 ≤ A ≤ 1.30, and 0.70 ≤ A ≤ 1.00.

In some implementations, the artificial graphite may be secondary particles.

In some embodiments, the powder compacted density of the artificial graphite at 2t pressure may be 1.60 g/cm³ - 1.95 g/cm³, and optionally 1.70 g/cm³ - 1.95 g/cm³ and 1.75 g/cm³ - 1.90 g/cm³, for example 1.70 g/cm³, 1.80 g/cm³, 1.90 g/cm³, 1.95 g/cm³, 1.70 g/cm³ - 1.90 g/cm³, 1.75 g/cm³ - 1.95 g/cm³, 1.80 g/cm³ - 1.95 g/cm³, and 1.80 g/cm³ - 1.90 g/cm³ The artificial graphite having the powder compacted density within the suitable range can increase compacted density of the negative electrode plate, thereby further increasing energy density of the secondary battery.

In some embodiments, the particle size by volume Dᵥ1 of the artificial graphite may be 1.5 µm-3.5 µm, and optionally 1.8 µm-3.2 µm, and further optionally 2.0 µm-3.2 µm, for example, 1.6 µm-3.4 µm, 1.7 µm-3.3 µm, 1.9 µm-3.1 µm, 2.0 µm-3.0 µm, 2.3 µm-2.8 µm, and 2.5 µm-3.5 µm. Appropriate Dᵥ1 of artificial graphite is suitable for the artificial graphite to have a more round and smooth surface, and is conducive to increasing adhesion between particles of the artificial graphite serving as a negative electrode active material, thereby effectively maintaining contact between particles, reducing an increase in the thickness of the electrode plate, and reducing cycling swelling of the electrode plate. This is not only conducive to reducing volume swelling of the secondary battery during cycling swelling, but also conducive to increasing the energy density of the secondary battery.

In some embodiments, a particle size by volume Dᵥ50 of the artificial graphite may be 10.0 µm-20.0 µm, and optionally 12.0 µm-18.0 µm, for example, 10.0 µm-18.0 µm, 14.0 µm-16.0 µm, and 14.0 µm-18.0 µm. Appropriate Dᵥ50 of the artificial graphite is suitable for the artificial graphite to have high active ion and electron transmission performance, and reduces side reactions of the electrolyte solution in a negative electrode. Artificial graphite with appropriate Dᵥ50 is also conducive to increasing the powder compacted density of the artificial graphite. The artificial graphite can allow the electrode plate to have a high compacted density, and thus increase energy density of the secondary battery.

In some embodiments, a gram capacity of the artificial graphite is 350 mAh/g or more, and optionally 352 mAh/g or more. A higher gram capacity of the artificial graphite indicates a higher energy density of the secondary battery containing the artificial graphite. The artificial graphite according to this application has low cycling swelling and a high gram capacity, which together enable the secondary battery according to this application to have low cycling swelling and high energy density.

### [Preparation method of artificial graphite]

A second aspect of this application provides a preparation method of artificial graphite, and any type of the foregoing artificial graphite can be prepared by using this preparation method.

An embodiment of this application provides a preparation method of artificial graphite, including the following steps:
S1: performing crushing, grading, and shaping treatment on a raw material to obtain a precursor;
S2: performing granulation treatment on the precursor obtained in step S1 to obtain an intermediate 1;
S3: performing graphitization treatment on the intermediate 1 obtained in step S2 at a temperature of 2700°C-3200°C to obtain an intermediate 2; and
S4: performing mechanical treatment on the intermediate 2 obtained in step S3 in a mechanical fusion machine to obtain artificial graphite;
where the artificial graphite includes secondary particles and satisfies A ≥ 0.5, where A is a ratio of a powder compacted density of the artificial graphite at 2t pressure to a particle size by volume Dᵥ1 of the artificial graphite.

In some embodiments, in the mechanical treatment, a rotating speed of the mechanical fusion machine is 600 rpm-1400 rpm, and optionally 800 rpm-1200 rpm, for example, 600 rpm-1300 rpm, 600 rpm-1200 rpm, 700 rpm-1400 rpm, 800 rpm-1400 rpm, 800 rpm-1300 rpm, or 900 rpm-1200 rpm. In a process of mechanical treatment on the intermediate 2 obtained in step S3, an appropriate rotating speed of the mechanical fusion machine can guarantee that artificial graphite satisfying a required particle size by volume Dᵥ1 (may be 1.5 µm-3.5 µm, optionally 1.8 µm-3.2 µm, and further optionally 2.0 µm-3.2 µm) can be obtained, thus artificial graphite with a desired round and smooth surface is obtained.

In some embodiments, a treatment time of the mechanical treatment may be 5 min to 30 min, and optionally 5 min to 25 min, for example, 10 min-30 min, 5 min-27 min, 5 min-26 min, 10 min-20 min, or 5 min-15 min. In a process of mechanical treatment, a suitable mechanical treatment time can guarantee that artificial graphite satisfying a required particle size by volume Dᵥ1 (may be 1.5 µm-3.5 µm, optionally 1.8 µm-3.2 µm, and further optionally 2.0 µm-3.2 µm) can be obtained, thus artificial graphite with a desired round and smooth surface is obtained.

In some embodiments, the raw material may include one or more of green petroleum coke, calcined petroleum coke, needle green coke, calcined needle coke, pitch coke, and metallurgical coke; and optionally, the raw material may include one or more of green petroleum coke, needle green coke, and calcined needle coke.

In some embodiments, in step S1, the raw material may be crushed by using a device and method known in the art, for example, a jet mill, a mechanical mill, or a roller mill. A large quantity of undersized particles are usually generated in a crushing process, and sometimes there are also oversized particles. Therefore, after crushing, grading treatment may be performed according to requirements to remove undersized particles and oversized particles from crushed powder. Particle products with good particle size distribution can be obtained after the grading treatment, where Dᵥ50 may be 8.0-13.5µm, to facilitate subsequent shaping and/or granulation process. Grading treatment may be performed by using a device and method known in the art, for example, a grading sieve, a gravity grading machine, or a centrifugal grader.

In some embodiments, in step S 1, the shaping treatment may be performed by using a device (for example, a shaping machine or another shaping device) and method known in the art on particle products obtained after the grading treatment, for example, grinding corners and edges of the particle products obtained after the grading treatment to facilitate subsequent operations, so that products obtained after the shaping treatment have high stability.

In some embodiments, step S1 may further include removing fine powder after the shaping. Fine powder may be removed by using a device and method known in the art, for example, a grading sieve, a gravity grading machine, or a centrifugal grader.

In some embodiments, in step S2, granulation is performed on the precursor obtained in step S1 to form secondary particles by agglomerating independently dispersed primary particles. A binder may be used in the granulation process, and optionally an amount of the binder used may be 2%-15% of a weight of the precursor used for the granulation in step S2, for example, 2%-12%, 4%-12%, 5%-15%, or 6%-10%; and optionally, the binder may include one or more of coal tar, pitch, epoxy resin, and phenolic resin.

In step S2, the granulation may be performed by using a device known in the art, for example, a granulator. The granulator usually includes an agitating reactor and a temperature control module for the reactor. Further, by adjusting process conditions such as stirring speed, heating rate, granulation temperature, and cooling rate in the granulation process, Dᵥ50 of a product (namely the intermediate 1) obtained by granulation may be controlled to be 14.5-24.0 µm. Optionally, in the granulation process in this application, a stirring speed is 800 r/min-1500 r/min, a heating rate is 8-15°C per minute, a granulation temperature is 400°C-650°C, and a granulation time is 6-10 hours.

In some embodiments, in step S3, the graphitization treatment is performed on the intermediate 1 obtained in step S2 to obtain an intermediate 2. In some embodiments, a temperature for the graphitization treatment in step S3 may be 2700°C-3200°C, for example, 2700°C-3100°C, 3000°C-3200°C, and 2800°C-3100°C.

In some embodiments, during the mechanical treatment in step S4, a rotating speed of the mechanical fusion machine may be 600 rpm-1400 rpm, and optionally 800 rpm-1200 rpm, for example, 600 rpm, 700 rpm, 800 rpm, 900 rpm, 1100 rpm, 1400 rpm, 600 rpm-1200 rpm, 700 rpm-1200 rpm, or 900 rpm-1100 rpm. A treatment time of the mechanical treatment may be 5 min to 30 min, and optionally 5 min to 25 min, for example, 5 min, 10 min, 15 min, 20 min, 25 min, 30 min, 5 min to 25 min, 5 min-20 min, 5 min-15 min, and 10 min-20 min. With the rotating speed of the mechanical fusion machine within the suitable range and the mechanical treatment time within the suitable range, not only corners and edges of lumpy particles can be removed, making artificial graphite particles finally obtained more round and smooth and helping increase adhesion between particles, but also the particle size by volume Dᵥ1 of the artificial graphite obtained can be within a range of 1.5 µm-3.5 µm, and a powder compacted density of the artificial graphite at 2t pressure be within a range of 1.60 g/cm³ - 1.95 g/cm³. This helps obtain artificial graphite satisfying A ≥ 0.5 (A is a ratio of a powder compacted density (measured in g/cm³) of the artificial graphite at 2t pressure to a particle size by volume Dᵥ1 (measured in µm) of the artificial graphite), which further significantly reduces cycling swelling of a negative electrode plate containing the artificial graphite and volume swelling of a secondary battery containing the artificial graphite during cycling. Thus, it helps obtain a secondary battery with both high volumetric energy density and low volume swelling during cycling. When the rotating speed of the mechanical fusion machine and the mechanical treatment time go beyond the foregoing ranges, an excessively high rotating speed and an excessively long period of treatment time lead to an increase of surface defects of a material and excessively fast decay of capacity of the secondary battery containing the artificial graphite during cycling. When the rotating speed of the mechanical fusion machine and the mechanical treatment time are below the foregoing ranges, an excessively low rotating speed and an excessively short period of treatment time lead to insufficient removal of corners and edges of particles, without increasing adhesion between particles and without significant reduction of swelling.

Dᵥ1 and Dᵥ50 of artificial graphite may be determined in accordance with GB/T 19077.1-2016 by using a laser particle size analyzer (for example, Malvern Master Size 3000).

Physical definitions of Dᵥ1 and Dᵥ50 are as follows:
Dᵥ1: diameter of particles that account for 1% of a total volume is less than this value.
Dᵥ50: diameter of particles that account for 50% of a total volume is greater than this value and diameter of particles that account for the other 50% of the total value is less than this value. Dᵥ50 represents a median particle size of the powder.

A powder compacted density of artificial graphite can be determined by using a method well-known in the art. For example, in accordance with GB/T 24533-2009, an electronic pressure testing machine (for example, UTM7305) may be used for testing: A specific amount of powder is placed in a dedicated compaction mould, different pressures are set, and powder thicknesses at different pressures may be read on the device, and compacted densities at different pressures may be obtained through calculation.

### [Secondary battery]

This application provides a secondary battery, including any type of the artificial graphite according to the first aspect of the present invention or any type of the artificial graphite prepared by using the method according to the second aspect of the present invention.

Generally, the secondary battery includes a positive electrode plate, a negative electrode plate, an electrolyte, and a separator. In a battery charging and discharging process, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent short circuit of the positive electrode and the negative electrode and to allow the ions to pass through.

### [Negative electrode plate]

The negative electrode plate includes a negative electrode current collector and a negative electrode film disposed on at least one surface of the negative electrode current collector. In an example, the negative electrode current collector includes two back-to-back surfaces in a thickness direction thereof, and the negative electrode film layer is provided on either or both of the two back-to-back surfaces of the negative electrode current collector.

A material with good conductivity and mechanical strength may be used as the negative electrode current collector to conduct electricity and collect current. In some embodiments, a copper foil may be used as the negative electrode current collector.

The negative electrode film includes a negative electrode active material, where the negative electrode active material includes any type of the artificial graphite according to the first aspect of this application, which can significantly reduce volume swelling of the negative electrode plate containing artificial graphite of this application during cycling. Low volume swelling is not only conducive to maintaining a high volumetric energy density of the secondary battery, but also conducive to reducing the internal stress of the cell of the secondary battery and reducing deformation of the cell under an action of the internal stress, effectively improving safety performance of the secondary battery.

In some embodiments, steps of preparing negative electrode plate by using any one type or several types of artificial graphite of this application may include: dispersing the negative electrode active material including any one type or several types of artificial graphite of this application, a binder, an optional thickener, and a conductive agent in a solvent, where the solvent may be deionized water, to form a uniform negative electrode slurry; and applying the negative electrode slurry to the negative electrode current collector, followed by processes such as drying and cold pressing, to obtain the negative electrode plate.

In some embodiments, the negative electrode plate optionally includes another negative electrode active material that can be used as a negative electrode of the secondary battery. The another negative electrode active material may be one or more of other graphite materials (for example, other artificial graphite and natural graphite), mesocarbon microbeads (MCMB for short), hard carbon, soft carbon, silicon-based materials, and tin-based materials.

In some embodiments, the binder may be selected from more than one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the thickener may be sodium carboxymethyl cellulose (CMC).

In some embodiments, the conductive agent for the negative electrode plate may be selected from one or more of graphite, superconducting carbon, acetylene black, carbon black, Ketjen black, carbon dots, carbon nanotubes, graphene, and carbon nanofiber.

### [Positive electrode plate]

A positive electrode plate includes a positive electrode current collector and a positive electrode film that is provided on at least one surface of the positive electrode current collector and that includes a positive electrode active material. In an example, the positive electrode current collector has two back-to-back surfaces in a thickness direction thereof, and the positive electrode film layer is disposed on either or both of the two back-to-back surfaces of the positive electrode current collector.

A material with good conductivity and mechanical strength may be used as the positive electrode current collector. In some embodiments, the positive electrode current collector may be an aluminum foil.

The positive electrode active material is not limited to a specific type in this application, and may use a material known in the art and capable of being used for positive electrodes of secondary batteries, which can be selected by those skilled in the art based on an actual need.

In some embodiments, the secondary battery may be a lithium-ion secondary battery. The positive electrode active material may be selected from lithium transition metal oxide and modified materials thereof. The modified material may be lithium transition metal oxide being modified through doping and/or coating. For example, the lithium transition metal oxide may be selected from one or more of lithium cobalt oxide, lithium nickel oxide, lithium manganese oxide, lithium nickel manganese oxide, lithium nickel cobalt manganese oxide, lithium nickel cobalt aluminum oxide, and olivine-structured Li-containing phosphate.

In an example, the positive electrode active material of the secondary battery may be selected from one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ (LFP), and LiMnPO₄.

In some embodiments, the positive electrode film further optionally includes a binder. The binder is not limited to any specific type, and may be selected by persons skilled in the art as required. In an example, the binder for positive electrode film may include one or more of polyvinylidene fluoride (PVDF) and polytetrafluoroethylene (PTFE).

In some embodiments, the positive electrode film further optionally includes a conductive agent. The conductive agent is not specifically limited to any particular type, and may be selected by those skilled in the art based on an actual need. In an example, the conductive agent for the positive electrode film may include one or more of graphite, superconducting carbon, acetylene black, carbon black, Ketjen black, carbon dots, carbon nanotubes, graphene, and carbon nanofiber.

### [Electrolyte]

The electrolyte conducts ions between the positive electrode plate and the negative electrode plate. The electrolyte is not limited to any specific type in this application, and may be selected as required. For example, the electrolyte may be in a liquid state, a gel state, or an all-solid-state.

In some embodiments, the electrolyte is an electrolyte solution. The electrolyte solution includes an electrolytic salt and a solvent.

In some embodiments, the electrolytic salt may be one or more of LiPF₆ (lithium hexafluorophosphate), LiBF₄ (lithium tetrafluoroborate), LiClO₄ (lithium perchlorate), LiAsF₆ (lithium hexafluoroborate), LiFSI (lithium bis(fluorosulfonyl)imide), LiTFSI (lithium bistrifluoromethanesulfonimide), LiTFS (lithium trifluoromethanesulfonat), LiDFOB (lithium difluorooxalatoborate), LiBOB (lithium bisoxalatoborate), LiPO₂F₂ (lithium difluorophosphate), LiDFOP (lithium difluorophosphate), and LiTFOP (lithium tetrafluoro oxalate phosphate).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoro ethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE).

In some embodiments, the electrolyte solution further optionally includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

### [Separator]

Secondary batteries using an electrolyte solution and some secondary batteries using a solid electrolyte further include a separator. The separator is disposed between the positive electrode plate and the negative electrode plate for isolation. The separator is not limited to any specific type in this application, and may be any commonly known porous separator with good chemical stability and mechanical stability. In some embodiments, a material of the separator may be selected from one or more of glass fiber, non-woven fabric, polyethylene, polypropylene, and polyvinylidene fluoride. The separator may be a single-layer film or a multi-layer composite film. When the separator is a multi-layer composite film, each layer may be made of the same or different materials.

### [Outer package]

In some embodiments, the secondary battery may include an outer package for encapsulating the positive electrode plate, the negative electrode plate, and the electrolyte. In an example, the positive electrode plate, the negative electrode plate, and the separator may be stacked or wound to form a cell of a stacked structure or a cell of a wound structure, and the cell is packaged in the outer package; the electrolyte may be an electrolyte solution, and the electrolyte solution infiltrates into the cell. There may be one or more cells in the secondary battery, and the quantity may be adjusted as required.

In some examples, the outer package of the secondary battery may alternatively be a soft pack, for example, a soft pouch. A material of the soft pack may be plastic, for example, one or more of polypropylene (PP), polybutylene terephthalate (PBT), polybutylene succinate (PBS), and the like. Alternatively, the outer package of the secondary battery may be a hard shell, for example, an aluminum shell.

In some embodiments, a positive electrode plate, a negative electrode plate, and a separator may be made into an electrode assembly through winding or stacking.

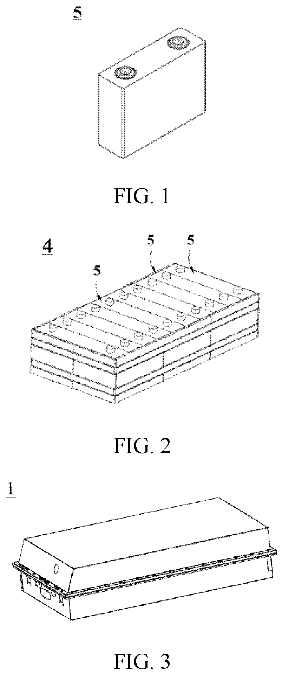

This application does not impose special limitations on a shape of the secondary battery, and the secondary battery may be cylindrical, rectangular, or of any other shapes. FIG. 1 shows a secondary battery 5 with a rectangular structure as an example.

Secondary batteries provided by the present invention may be assembled into a battery module, and a battery module may include a plurality of secondary batteries, the specific quantity of which may be adjusted based on use and capacity of the battery module.

FIG. 2 shows a battery module 4 as an example. Referring to FIG. 2, in the battery module 4, a plurality of secondary batteries 5 may be sequentially arranged in a length direction of the battery module 4. Certainly, the secondary batteries 5 may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In the present invention, battery modules assembled from secondary batteries may be further assembled into a battery pack, and a quantity of battery modules included in the battery pack may be adjusted based on use and capacity of the battery pack.

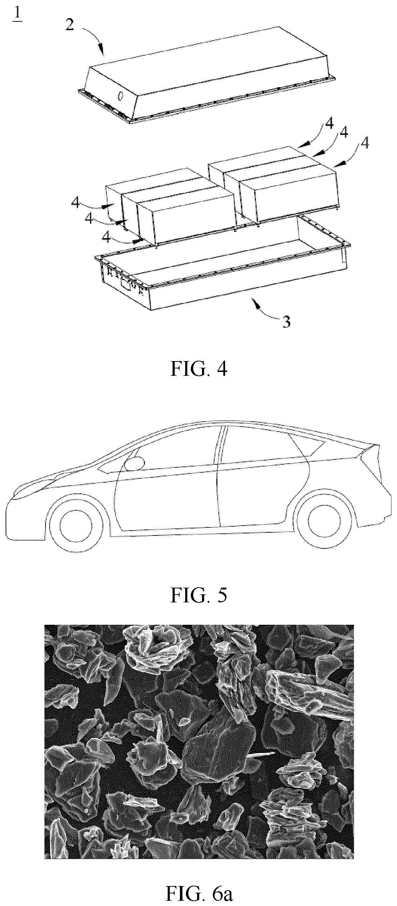

FIG. 3 and FIG. 4 show a battery pack 1 as an example. Referring to FIG. 3 and

FIG. 4, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

### [Electric apparatus]

This application further provides an electric apparatus. The electric apparatus includes the secondary batteries according to this application. The secondary batteries supply power to the electric apparatus. The electric apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the electric apparatus based on requirements for using the electric apparatus.

FIG. 5 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the electric apparatus may be a mobile phone, a tablet computer, a notebook computer, or the like. The electric apparatus is usually required to be light and thin, and the secondary battery may be used as a power source.

### Example

The following describes examples in this application. The examples described below are exemplary and only used to explain this application, but cannot be understood as limitations on this application. Examples whose technical solutions or conditions are not specified are made based on technical solutions or conditions described in documents in the art, or made based on the product specification. The reagents or instruments used are all conventional products that can be purchased on the market if no manufacturer is indicated.

### [Performance test]

### (1) Gram capacity test of artificial graphite

The artificial graphite prepared, a conductive agent Super P, a thickener (CMC-Na), and a binder (SBR) at a mass ratio of 94.5:1.5:1.5:2.5 were mixed uniformly in a solvent deionized water to obtain a slurry; the prepared slurry was applied on a copper foil current collector, which was dried in an oven for later use; a metal lithium sheet was used as a counter electrode; a polyethylene (PE) film was used as a separator; ethylene carbonate (EC), ethyl methyl carbonate (EMC), and diethyl carbonate (DEC) were mixed at a volume ratio of 1:1:1, and then LiPF₆ was uniformly dissolved in the solution to obtain an electrolyte solution, where a concentration of LiPF₆ was 1 mol/L; and the foregoing components were assembled into a CR2430-type button battery in a glove box protected by argon.

The button battery obtained was left standing for 12 hours, discharged to 0.005 V at a constant current rate of 0.05C, left standing for 10 min, discharged to 0.005 V at a constant current of 50 µA, left standing for 10 min, discharged to 0.005 V at a constant current of 10 µA, and charged to 2 V at a constant current rate of 0.1C, and then the charging capacity was recorded. A ratio of the charging capacity to the mass of the artificial graphite is the gram capacity of the artificial graphite prepared.

### (2) Cycling swelling rate test of negative electrode plate

Thickness of the negative electrode plate was denoted as H0. The secondary battery was prepared by using the cold-pressed negative electrode plate, and the positive electrode plate, the separator, and the electrolyte solution. At 25°C, 100% DOD (depth of discharge of 100%, in other words, full discharge after full charge) 1C/1C cycles were performed on the secondary battery with a Neware charge and discharge machine. A discharge capacity of the first cycle (namely, an initial capacity) was denoted as 100%. The cycle was stopped when a cycling capacity retention rate was 80% of the initial capacity. Then the secondary battery was charged to 100% SOC (State of Charge, state of charge) and disassembled to measure a thickness of a corresponding negative electrode plate, which was denoted as H1. The cycling swelling rate of the negative electrode plate was: (H1/H0-1) × 100%.

### (3) Cycling capacity retention rate

At 25°C, a charge and discharge test was performed on the lithium battery. A charging and discharging cycle process was as follows: the lithium battery was constant-current charged to 4.3 V at 1C, then constant-voltage charged to a current rate of 0.05C at 4.3 V, left standing for 5 min, and then constant-current discharged to 2.8 V at 1C. A battery capacity at that moment was recorded as C1. This was one charge and discharge cycle of the battery. The capacity of the battery was recorded as C1200 after 1200 cycles based on the above processes. Cycling capacity retention rate = C1200/C1 × 100%.

### (4) Cohesion test of negative electrode plate

Two surfaces of a 2 cm wide stainless-steel plate were pasted with double-sided adhesive tape, and the electrode plates under test were uniformly pasted on the double-sided tape with a same length and width. Copper foil adhesive tape was uniformly pasted onto a surface of an electrode plate (ensuring that the surface is smooth and free of wrinkles after the pasting), leaving a small section of the copper foil adhesive tape attached to a piece of paper (the copper coil adhesive tape and the piece of paper are in one straight line). Parameters of a tensile machine were properly set. The electrode plates were vertically placed in the middle of a slot of the tensile machine in an upright way, and then test was conducted by clicking Start on a computer to obtain cohesion data.

### Example 1

### Preparation of artificial graphite

S1: A raw material needle green coke was fed into a jaw crusher via a vibrator feeder for coarse crushing. Then the qualified material was sent to a mechanical mill for fine crushing, and grading treatment and shaping treatment were performed to obtain a precursor with Dᵥ50 of 11µm.
S2: The precursor obtained in step S1 and binder pitch (Dᵥ50 of 5 µm-8 µm) equivalent to 10% of weight of the precursor used for granulation were added into a reactor for granulation, stirred at a speed of 1200 r/min, heated from room temperature to 560°C at a speed of 10°C/minute, then left standing at a constant temperature for 8 hours, and granulated to a material with Dᵥ50 of 18 µm to obtain an intermediate 1;
S3: The intermediate 1 obtained in step S2 was added into a graphitization furnace, heated to 3000°C for graphitization treatment, and sieved with a 200-mesh screen to obtain an intermediate 2;
S4: The intermediate 2 obtained in step S3 was placed in a mechanical fusion machine for mechanical treatment, where a rotating speed of the mechanical fusion machine was 900 rpm and a mechanical treatment time was 15 min. Artificial graphite with Dᵥ50 of 14 µm, Dᵥ1 of 2 µm, a powder compacted density of 1.8 g/cm³ at 2t pressure, and a gram capacity of 357 mAh/g was obtained. Specific performance indicator parameters are shown in Table 1 below. An SEM image of the artificial graphite prepared in Example 1 is shown in FIG. 6a.

### Preparation of negative electrode plate

The artificial graphite prepared, a conductive agent (Super P), a binder (SBR), and a thickener (CMC-Na) at a mass ratio of 96.2:0.8:1.8:1.2 were fully stirred and mixed in an appropriate amount of deionized water, to form a uniform negative electrode slurry. The negative electrode slurry was applied onto a surface of a negative electrode current collector copper foil, followed by drying and cold pressing, to obtain a negative electrode plate. The negative electrode plate had a compacted density of 1.65 g/cm³ and a surface density of 11.4 mg/cm². The test results of cohesion and cycling swelling rate of the negative electrode plates and the results of cycling capacity retention rate of the secondary batteries are shown in Table 2 below.

### Preparation of positive electrode plate

A positive electrode active material LiNi_{0.5}Co_{0.2}Mn_{0.3}O₂ (NCM523), a conductive agent (Super P), and a binder PVDF at a weight ratio of 96.2:2.7:1.1 were fully stirred and mixed in an appropriate amount of NMP, to form a uniform positive electrode slurry. The positive electrode slurry was applied onto a surface of a positive electrode current collector aluminum foil, followed by drying and cold pressing, to obtain a positive electrode plate. The positive electrode plate had a compacted density of 3.45 g/cm³ and a surface density of 18.8 mg/cm².

### Preparation of electrolyte solution

Ethylene carbonate (EC), ethyl methyl carbonate (EMC), and diethyl carbonate (DEC) were mixed at a volume ratio of 1:1:1, and then LiPF₆ was uniformly dissolved in the foregoing solution to obtain an electrolyte solution, where a concentration of LiPF₆ was 1 mol/L.

### Separator

A polyethylene (PE) film was used.

### Preparation of secondary battery

The positive electrode plate, the separator, and the negative electrode plate were stacked in sequence and wound to obtain a cell. The cell was placed in an outer package, the electrolyte solution was injected, and processes such as packaging, standing, formation, and aging were performed to obtain a secondary battery. The outer package was a hard shell of length*width*height = 148 mm*28.5 mm*97.5 mm.

### Examples 2 to 14

Examples 2 to 6 were similar to Example 1 in preparation method except that a raw material for preparation of artificial graphite was adjusted. Process parameters of all examples and physical parameter test results of the artificial graphite prepared are shown in Table 1 below. The cohesion test results and cycling swelling rate results of the negative electrode plates containing the artificial graphite and the cycling capacity retention rate results of the secondary batteries including the negative electrode plates are shown in Table 2 below.

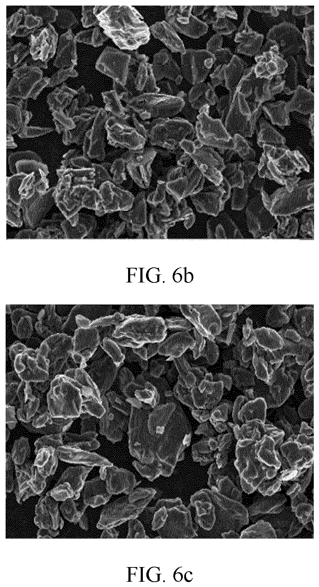

Specifically, in Example 2, a raw material for preparing artificial graphite was calcined petroleum coke. In Example 3, a raw material for preparing artificial graphite was green petroleum coke (no binder was used). In Example 4, a raw material for preparing artificial graphite was calcined needle coke. In Example 5, a raw material for preparing artificial graphite was pitch coke, and in Example 6, a raw material for preparing artificial graphite was metallurgical coke. FIG. 6b and FIG. 6c are SEM images of the artificial graphite prepared in Example 2 and Example 3, respectively.

Examples 7 to 9 were similar to Example 1 in preparation method except that an amount of the binder used during granulation in preparation of artificial graphite was adjusted. Process parameters of all examples and physical parameter test results of the artificial graphite prepared are shown in Table 1 below. The cohesion test results and cycling swelling rate results of the negative electrode plates containing the artificial graphite and the cycling capacity retention rate results of the secondary batteries including the negative electrode plates are shown in Table 2 below.

Specifically, an amount of the binder pitch used in Example 7 was 15% of the weight of the precursor used for granulation in Step S2, an amount of the binder pitch used in Example 8 was 8% of the weight of the precursor used for granulation in Step S2, and an amount of the binder pitch used in Example 9 was 5% of a weight of the precursor used for granulation in Step S2

Examples 10 to 11 were similar to Example 1 in preparation method except that a graphitization temperature for preparation of artificial graphite was adjusted. Process parameters of all examples and physical parameter test results of the artificial graphite prepared are shown in Table 1 below. The cohesion test results and cycling swelling rate results of the negative electrode plates containing the artificial graphite and the cycling capacity retention rate results of the secondary batteries including the negative electrode plates are shown in Table 2 below.

Examples 12 to 14 were similar to Example 1 in preparation method except that degree of mechanical fusion treatment in preparation of artificial graphite was adjusted. Process parameters of all examples and physical parameter test results of the artificial graphite prepared are shown in Table 1 below. The cohesion test results and cycling swelling rate results of the negative electrode plates containing the artificial graphite and the cycling capacity retention rate results of the secondary batteries including the negative electrode plate are shown in Table 2 below.

### Comparative Examples 1 to 12

Comparative Examples 1 to 6 were similar to Examples 1 to 6 in preparation method except that in step S3, there was not a step of mechanical fusion treatment after the graphitization treatment. Process parameters of all comparative examples and physical parameter test results of the artificial graphite prepared are shown in Table 1 below. The cohesion test results and cycling swelling rate results of the negative electrode plates containing the artificial graphite and the cycling capacity retention rate results of the secondary batteries including the negative electrode plates are shown in Table 2 below.

Comparative Examples 7 to 10 were similar to Example 1 in preparation method except that degree of mechanical fusion treatment in step S4 was adjusted. Process parameters of all comparative examples and physical parameter test results of the artificial graphite prepared are shown in Table 1 below. The cohesion test results and cycling swelling rate results of the negative electrode plates containing the artificial graphite and the cycling capacity retention rate results of the secondary batteries including the negative electrode plates are shown in Table 2 below.

Comparative Examples 11 and 12 were similar to Example 1 in preparation method except that mode of mechanical treatment in step S4 was adjusted. Specifically, in Comparative Example 11, a high-speed airflow impact granulator (a temperature of 600°C and a treatment time of 8 h) was used to perform mechanical crushing and spherification treatment on the intermediate 2 obtained in step S3, and spherical artificial graphite particles with Dᵥ50 of 10 µm-15 µm were obtained by sieving; and in Comparative Example 12, an airflow vortex crusher (power of 0.7 MPa) was used to perform mechanical crushing and spherification treatment on the intermediate 2 obtained in step S3. Spherical artificial graphite particles with Dᵥ50 of 10 µm-15 µm were obtained by sieving. Process parameters of all comparative examples and physical parameter test results of the artificial graphite prepared are shown in Table 1 below. The cohesion test results and cycling swelling rate results of the negative electrode plates containing the artificial graphite and the cycling capacity retention rate results of the secondary batteries including the negative electrode plates are shown in Table 2 below.

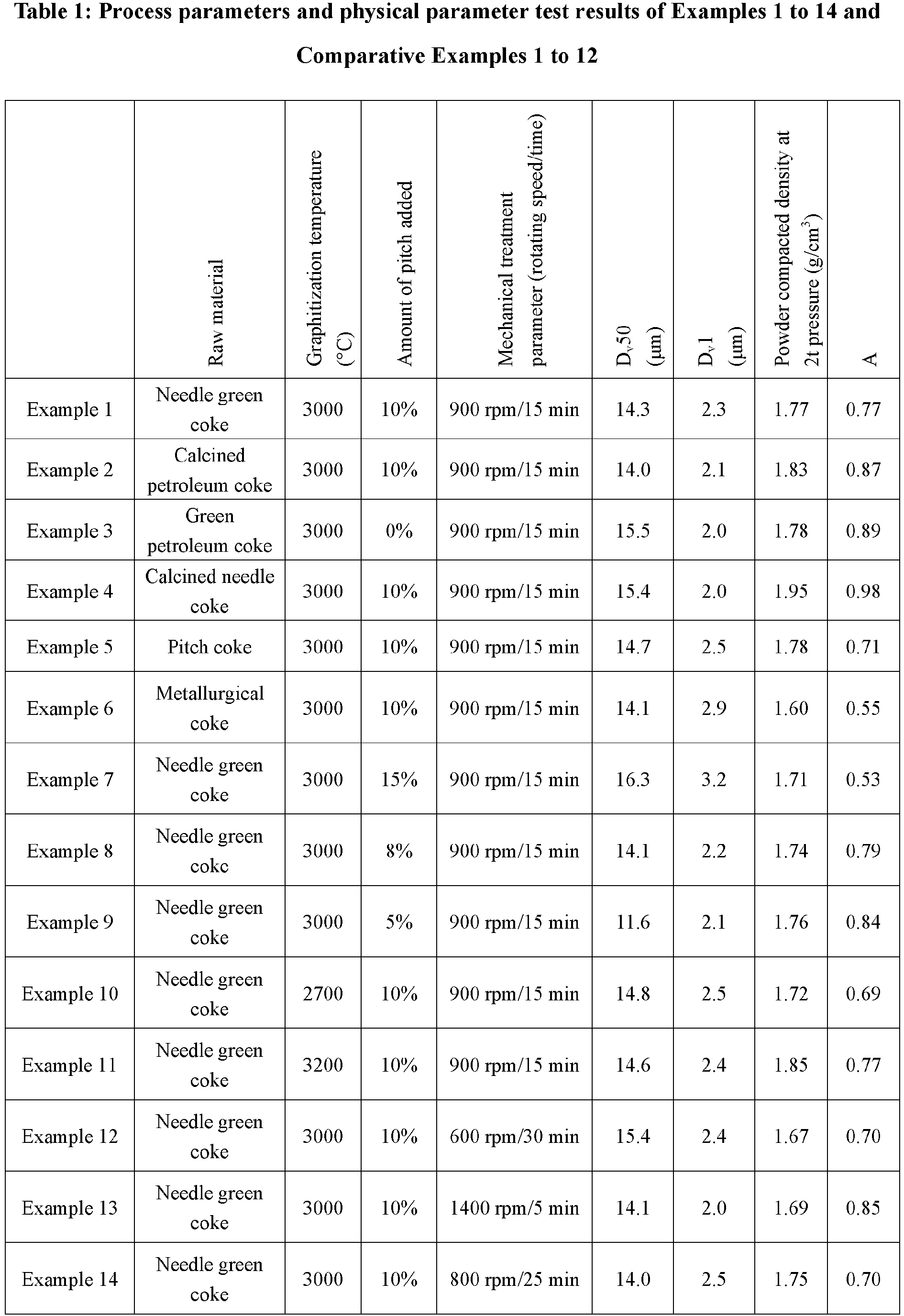

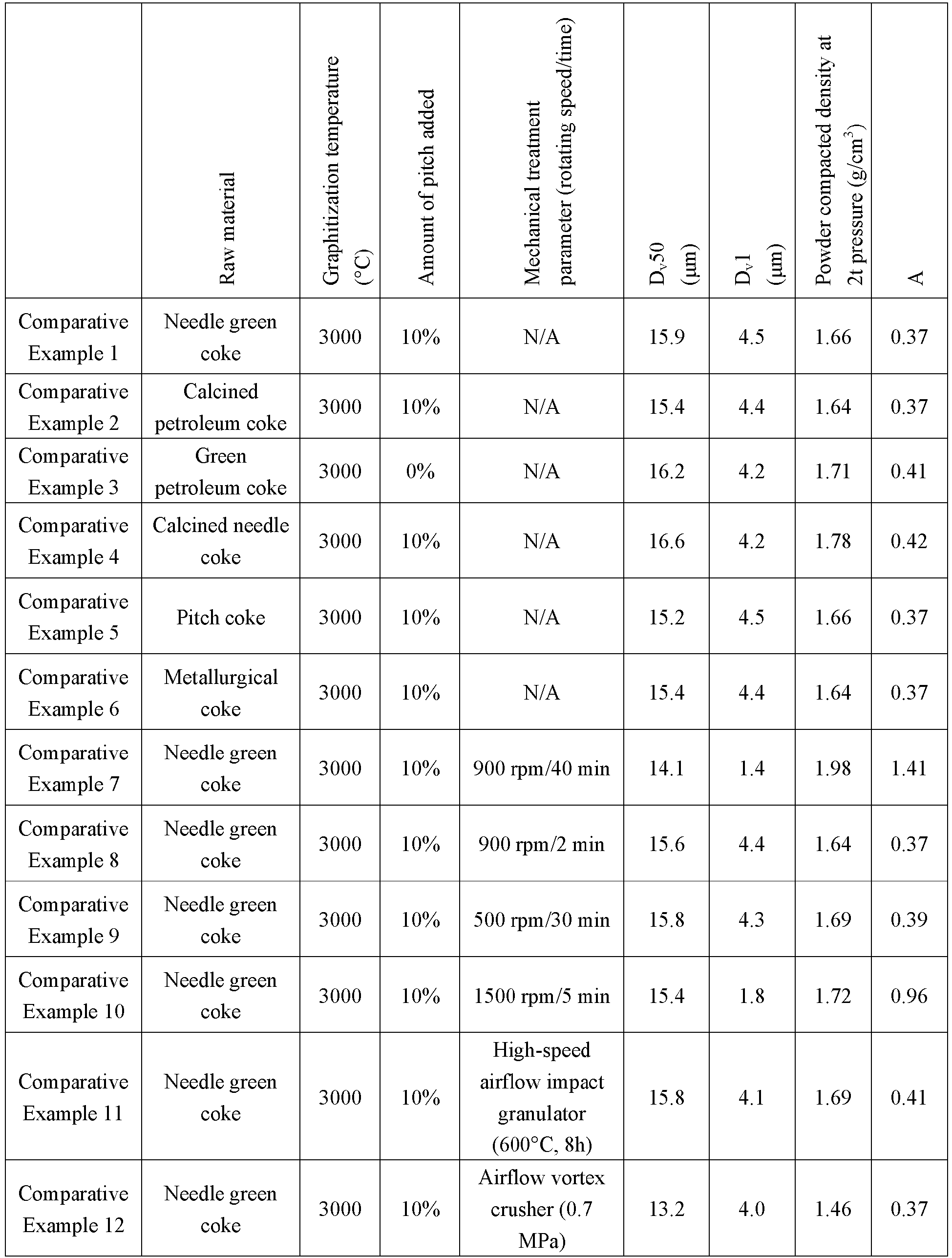

**Table 2: Performance test results of Examples 1 to 14 and Comparative Examples 1 to 12**

| | Gram capacity of artificial graphite [mAh/g] | Cohesion [N/m] | Cycling swelling of negative electrode plate [%] | Cycling capacity retention rate of secondary battery |
|---|---|---|---|---|
| Example 1 | 358.2 | 211.9 | 27.9 | 93.3 |
| Example 2 | 359.4 | 238.7 | 28.8 | 92.1 |
| Example 3 | 357.5 | 219.9 | 26.1 | 92.6 |
| Example 4 | 360.2 | 194.4 | 28.6 | 93.1 |
| Example 5 | 350.7 | 210.4 | 25.5 | 94.1 |
| Example 6 | 350.4 | 254.7 | 25.4 | 94.2 |
| Example 7 | 355.8 | 197.4 | 26.4 | 92.3 |
| Example 8 | 358.9 | 213.9 | 28.2 | 93.6 |
| Example 9 | 359.0 | 229.6 | 31.4 | 93.5 |
| Example 10 | 355.0 | 204.5 | 27.5 | 94.8 |
| Example 11 | 360.2 | 215.8 | 28.2 | 93.1 |
| Example 12 | 358.4 | 216.9 | 27.7 | 93.3 |
| Example 13 | 358.7 | 205.8 | 27.5 | 93.1 |
| Example 14 | 358.1 | 245.4 | 26.6 | 93.8 |
| Comparative Example 1 | 357.1 | 114.5 | 32.6 | 92.6 |
| Comparative Example 2 | 358.5 | 76.3 | 34.9 | 91.8 |
| Comparative Example 3 | 356.4 | 100.9 | 31.5 | 92.2 |
| Comparative Example 4 | 359.7 | 93.5 | 32.8 | 92.7 |
| Comparative Example 5 | 350.1 | 112.5 | 31.0 | 93.3 |
| Comparative Example 6 | 350.5 | 136.7 | 30.3 | 92.1 |
| Comparative Example 7 | 358.1 | 265.8 | 26.1 | 90.6 |
| Comparative Example 8 | 359.6 | 121.4 | 31.7 | 92.8 |
| Comparative Example 9 | 358.9 | 118.7 | 33.1 | 92.3 |
| Comparative Example 10 | 359.1 | 258.0 | 27.9 | 91.8 |
| Comparative Example 11 | 356.9 | 159.9 | 30.2 | 91.7 |
| Comparative Example 12 | 356.7 | 164.4 | 31.6 | 90.4 |

It can be learned from comparisons between Examples 1 to 14 and Comparative Examples 1 to 12 shown in the above Table 1 and Table 2 that, proper mechanical fusion treatment on the intermediate 2 after the graphitization treatment enables the artificial graphite prepared to satisfy A ≥ 0.5 (for example, 0.50 ≤ A ≤ 1.40, optionally 0.70≤ A ≤ 1.30, and further optionally 0.70≤ A ≤ 1.00, where A is a ratio of a powder compacted density of the artificial graphite at 2t pressure to a particle size by volume Dᵥ1), which can significantly improve cohesion of the negative electrode plate containing the artificial graphite, have an evident effect on reducing the cycling swelling rate of the electrode plate, and allow the artificial graphite to maintain a high gram capacity. This has an evident effect on reducing volume swelling of the secondary battery containing the artificial graphite during cycling, and increasing energy density, cycling capacity retention rate, and the like of the secondary battery, thus effectively improving service life and safety performance of the secondary battery.

In Comparative Examples 1 to 6, a step of mechanical fusion treatment is not performed after the graphitization treatment step. Therefore, the negative electrode plate prepared therefrom had a high cycling swelling rate and low cohesion, which was neither conducive to reducing volume swelling of the secondary battery including the negative electrode plate during cycling, nor conducive to increasing energy density of the secondary battery.

In the mechanical treatment process in Comparative Examples 7 and 8, the mechanical fusion treatment time was excessively long or excessively short. In Comparative Example 7, the excessively long treatment time reduced the cycling capacity retention rate of the secondary battery; in Comparative Example 8, the mechanical fusion treatment time was excessively short, and performance in all aspects of the negative electrode plate and the secondary battery that were obtained in Comparative Example 7 was equivalent to that of the negative electrode plates or secondary batteries that were obtained without mechanical treatment in Comparative Examples 1 to 6. In the mechanical treatment process in Comparative Examples 9 and 10, the rotating speed of the mechanical fusion machine was excessively low or excessively high. In Comparative Example 9, the excessively low rotating speed was unable to achieve a purpose of mechanical treatment, and performance in all aspects of the negative electrode plate and the secondary battery that were obtained in Comparative Example 9 was equivalent to that of the negative electrode plates or secondary batteries that were obtained without mechanical treatment in Comparative Examples 1 to 6; and in Comparative Example 10, the excessively high rotating speed combined with the excessively short mechanical treatment time could reduce cycling swelling rate of the negative electrode plate to some degree. However, the excessively high rotating speed was not conducive to improving cycling capacity retention rate of the secondary battery.

In Comparative Examples 11 and 12, a high-speed airflow impact granulator and an airflow vortex crusher were separately used to perform mechanical crushing and spherification treatment on the intermediate 2 obtained in step S3. Although spherified artificial graphite was obtained in both cases, results indicated that the above two types of mechanical treatment devices were not conducive to increasing cohesion of the negative electrode plate, and had no apparent effect on reducing cycling swelling rate of the negative electrode plate. In addition, the degree of mechanical treatment of the airflow vortex crusher was hard to control, resulting in low stability.

It should be noted that this application is not limited to the foregoing implementations. The foregoing implementations are merely examples, and implementations having constructions substantially the same as those of the technical idea and having the same effects as the technical idea within the scope of the technical solutions of this application are all included in the technical scope of this application. In addition, within the scope without departing from the essence of this application, various modifications that can be conceived by persons skilled in the art are applied to the implementations, and other modes constructed by combining some of the constituent elements in the implementations are also included in the scope of this application.

## Claims

1. Artificial graphite, wherein the artificial graphite comprises secondary particles and satisfies A ≥ 0.5, optionally 0.50 ≤ A ≤ 1.40, and further optionally 0.70 ≤ A ≤ 1.30;
wherein A is a ratio of a powder compacted density (measured in g/cm³) of the artificial graphite at 2t pressure to a particle size by volume Dᵥ1 (measured in µm) of the artificial graphite.

2. The artificial graphite according to claim 1, wherein the artificial graphite is secondary particles.

3. The artificial graphite according to claim 1 or 2, wherein the powder compacted density of the artificial graphite at 2t pressure is 1.60 g/cm³ - 1.95 g/cm³, and optionally 1.70 g/cm³ - 1.90 g/cm³.

4. The artificial graphite according to any one of claims 1 to 3, wherein the particle size by volume Dᵥ1 of the artificial graphite is 1.5 µm-3.5 µm, optionally 1.8 µm-3.2 µm, and further optionally 2.0 µm-3.2 µm.

5. The artificial graphite according to any one of claims 1 to 4, wherein a particle size by volume Dᵥ50 of the artificial graphite is 10.0 µm-20.0 µm, and optionally 12.0 µm-18.0 µm.

6. The artificial graphite according to any one of claims 1 to 5, wherein a gram capacity of the artificial graphite is 350 mAh/g or more, and optionally 352 mAh/g or more.

7. A preparation method of artificial graphite, comprising the following steps:
S1: performing crushing, grading, and shaping treatment on a raw material to obtain a precursor;
S2: performing granulation treatment on the precursor obtained in step S1 to obtain an intermediate 1;
S3: performing graphitization treatment on the intermediate 1 obtained in step S2 at a temperature of 2700°C-3200°C to obtain an intermediate 2; and
S4: performing mechanical treatment on the intermediate 2 obtained in step S3 in a mechanical fusion machine to obtain artificial graphite;
wherein the artificial graphite comprises secondary particles and satisfies A ≥ 0.5, and A is a ratio of a powder compacted density of the artificial graphite at 2t pressure to a particle size by volume Dᵥ1 of the artificial graphite.

8. The preparation method according to claim 7, wherein in the mechanical treatment, a rotating speed of the mechanical fusion machine is 600 rpm-1400 rpm, and optionally 800 rpm-1200 rpm.

9. The preparation method according to claim 7 or 8, wherein a treatment time of the mechanical treatment is 5 min to 30 min, and optionally 5 min to 25 min.

10. The preparation method according to any one of claims 7 to 9, wherein a binder is added in the granulation treatment, and an amount of the binder added is 5%-15% of a weight of the precursor used for the granulation in step S2; and
optionally, the binder comprises one or more of coal tar, pitch, epoxy resin, and phenolic resin.

11. The preparation method according to any one of claims 7 to 10, wherein the raw material comprises one or more of green petroleum coke, calcined petroleum coke, needle green coke, calcined needle coke, pitch coke, and metallurgical coke; and optionally, the raw material comprises one or more of green petroleum coke, needle green coke, and calcined needle coke.

12. A secondary battery, comprising a negative electrode plate, wherein the negative electrode plate comprises a negative electrode active material, and the negative electrode active material comprises the artificial graphite according to any one of claims 1 to 6 or the artificial graphite prepared by using the method according to any one of claims 7 to 11.

13. An electric apparatus, comprising the secondary battery according to claim 12.
